# FASCICULE DE BREVET EUROPEEN

(11) **EP 3 153 475 B1**
(45) Date de publication et mention de la délivrance du brevet: **19.10.2022**
(21) Numéro de dépôt: 15306586.7
(22) Date de dépôt: 08.10.2015
(51) Int. Cl.: C02F 1/28, C02F 101/30

(54) **PROCÉDÉ DE DÉPOLLUTION DES EAUX PAR ADSORPTION SUR CHARBON ACTIF**
VERFAHREN ZUR REINIGUNG VON WASSER DURCH ADSORPTION VON AKTIVKOHLE
METHOD FOR DEPOLLUTING WATER BY ADSORPTION ON ACTIVATED CARBON

(43) Date de publication de la demande: 12.04.2017
(73) Titulaire: SAUR, 78280 Guyancourt (FR)
(72) Inventeur: PEROT, Jean, 78990 ELANCOURT (FR); COQUET, Yves, 78960 VOISINS LE BRETONNEUX (FR)
(74) Mandataire: Regimbeau

(56) Documents cités:
- FR-A1- 2 874 913
- FR-A1- 3 009 789

## Description

La présente invention concerne le domaine du traitement des eaux, plus particulièrement des eaux usées, telles que les eaux usées urbaines et industrielles. Plus particulièrement, la présente invention concerne un procédé de dépollution des eaux par adsorption sur charbon actif en grain dans un réacteur de traitement à flux ascendant et lit expansé.

### ETAT DE LA TECHNIQUE

De nos jours, le matériel et les méthodes analytiques sont suffisamment développés pour détecter dans l'eau des molécules provenant de l'activité humaine, telles que les pesticides, herbicides, produits médicamenteux, etc. Ces molécules sont désignées de manière générique par les termes « produits émergents » ou « micropolluants ».

Des procédés ont été développés pour éliminer ces micropolluants des eaux. Tout particulièrement, il a été proposé d'éliminer ces micropolluants sur du charbon actif en poudre (CAP) (3 µm < granulométrie < 100 µm) ou en grain (CAG) (100 µm < granulométrie < 1000 µm). Le charbon actif permet l'élimination de nombreux micropolluants organiques et de nombreuses matières organiques par adsorption.

L'élimination de micropolluants par adsorption sur charbon actif en grain peut être réalisée au sein de réacteur de traitement tel que décrit dans le brevet FR2874913, préférentiellement destiné au traitement des eaux souterraines et de surface à faible pollution organique.

Depuis quelques années, le traitement des eaux usées fait l'objet d'un intérêt tout particulier. En effet, les eaux traitées déversées en milieu naturel doivent répondre à des exigences réglementaires de plus en plus strictes, en particulier il doit être contrôlé que les micropolluants ne soient pas présents au-delà de certains seuils.

Les rejets issus des stations d'épuration impactent également la qualité de la ressource pour la production d'eau potable. Il est donc important de contrôler la qualité des eaux à potabiliser.

De manière générale, les eaux usées sont classées en deux catégories : les eaux urbaines et les eaux industrielles provenant, par exemple, des industries chimiques et pharmaceutiques. Dans un souci de satisfaire les exigences réglementaires, il a été proposé d'éliminer les micropolluants des eaux usées en utilisant les procédés d'adsorption sur charbon actif, notamment charbon actif en grain, tel que décrit dans le brevet FR2874913. Les eaux à potabiliser constituent une troisième catégorie d'eau où les traitements par adsorption sur charbon actif sont également très adaptés.

Dans les procédés de traitement par adsorption sur charbon actif, la quantité de charbon actif à injecter dans les réacteurs dépend de la concentration en micropolluants à traiter. Dans un souci de réduction du coût de traitement des eaux associé à l'utilisation de charbon actif en grain, il est important que le volume ou la masse de charbon actif en grain employé dans le réacteur de traitement soit optimal(e) pour obtenir un pourcentage efficace d'abattement des micropolluants organiques de l'eau.

Une méthode de contrôle et/ou de suivi de l'abattement des micropolluants dans les eaux afin de réguler les concentrations en charbon actif nécessaires à l'élimination des micropolluants dans les eaux usées est notamment décrite dans la demande de brevet FR3009789. Néanmoins, cette méthode ne permet pas de déterminer le volume ou la masse optimal(e), i.e. nécessaire et suffisant(e) en CAG, pour obtenir un pourcentage d'abattement des micropolluants préalablement fixé.

Par conséquent, il existait ainsi un besoin de mettre au point un procédé de dépollution des eaux contenant des micropolluants organiques par adsorption sur charbon actif en grain dans un réacteur de traitement, de manière à abattre un pourcentage de micropolluants préalablement fixé, permettant de déterminer spécifiquement la masse ou le volume de charbon actif en grain optimal(e) (nécessaire et suffisant(e)) dans le réacteur pour obtenir ledit pourcentage d'abattement des micropolluants organiques préalablement fixé.

### RESUME DE L'INVENTION

La présente invention concerne un procédé de dépollution des eaux, typiquement des eaux usées, contenant des micropolluants organiques par adsorption sur charbon actif en grain dans un réacteur de traitement à flux ascendant et lit expansé, de manière à abattre un pourcentage de micropolluants préalablement fixé, selon les revendications 1 et 2.

### BREVE DESCRIPTION DES FIGURES

La figure 1 représente un mode de réalisation particulier du réacteur de traitement utilisé dans le procédé de dépollution selon la présente invention.
La figure 2 est un graphique représentant le pourcentage d'abattement des micropolluants dans les eaux en fonction du rendement d'abattement UV par le traitement par adsorption sur charbon actif en grain.
La figure 3 est un graphique représentant le pourcentage d'abattement des micropolluants en fonction du taux de traitement en charbon appliqué.
La figure 4 est un graphique représentant le pourcentage d'abattement UV en fonction du taux de traitement en charbon appliqué.
La figure 5 est un graphique représentant le pourcentage d'abattement UV en fonction du temps selon un premier mode de réalisation particulier (réacteur initialement à vide).
La figure 6 est un graphique représentant le pourcentage d'abattement UV en fonction du temps selon un second mode de réalisation particulier (réacteur avec une charge initiale).
La figure 7 est un graphique représentant la vitesse ascensionnelle, l'évolution de la hauteur de lit de charbon actif et les MES en sortie de réacteur de traitement lors du lavage.
La figure 8 est un diagramme représentant la répartition de la taille des particules de charbon actif en grain selon un mode de réalisation particulier.
La figure 9 représente la taille effective du charbon actif en grain selon la hauteur du lit de charbon.

### DEFINITIONS

Le terme « micropolluant(s) » tel qu'utilisé dans la description de la présente invention désigne des micropolluants qui peuvent être choisis parmi les pesticides, herbicides, phtalates, substances pharmaceutiques et leurs combinaisons. En particulier, le terme « micropolluant(s) » peut désigner spécifiquement des substances pharmaceutiques, tout particulièrement des substances pharmaceutiques choisies parmi la carbamazepine, l'oxazepam, le diclofenac, l'ibuprofène, le kétoprofène, le furosemide, l'atanolol, le propanolol, le sulfamethoxazole et le benzotriazole.

L'expression « eaux dépolluées » désigne l'état des eaux après mise en contact avec un lit de charbon actif en grain.

L'expression « eaux dépolluées et décantées » désigne l'état des eaux après traitement selon la présente invention.

Le terme « eaux » tel qu'utilisé dans la description de la présente invention désigne les eaux usées ou les eaux à potabiliser.

### EXPOSE DE L'INVENTION

La Demanderesse a développé un procédé de dépollution des eaux, typiquement des eaux usées, contenant des micropolluants organiques par adsorption sur charbon actif en grain dans un réacteur de traitement à flux ascendant, qui permet d'optimiser la masse ou le volume de charbon actif en grain dans le réacteur, pour un taux de traitement donné, et ainsi de dimensionner le réacteur. Tout particulièrement, le procédé permet de déterminer la masse ou le volume optimal(e) de charbon actif en grain dans le réacteur nécessaire et suffisant(e) pour obtenir un pourcentage d'abattement des micropolluants organiques préalablement fixé (%Mp).

Ainsi, la présente invention concerne un procédé de dépollution des eaux, typiquement des eaux usées, contenant des micropolluants organiques par adsorption sur charbon actif en grain dans un réacteur de traitement à flux ascendant, de manière à abattre un pourcentage de micropolluants préalablement fixé, comprenant l'injection des eaux en partie inférieure du réacteur contenant un lit de charbon actif de manière à créer une expansion dudit charbon actif en assurant parallèlement la séparation gravitaire entre les eaux dépolluées et les particules de charbon actif et la récupération par surverse des eaux dépolluées et décantées en partie supérieure du réacteur, ledit procédé comprenant au moins les étapes suivantes :
1) à partir dudit pourcentage d'abattement des micropolluants préalablement fixé (%MP_{f}), détermination du taux de traitement en charbon actif en grain (Tx) à injecter dans ledit réacteur, puis mise en service du réacteur de traitement par injection des eaux et traitement par adsorption des micropolluants sur charbon actif en grain audit taux de traitement, et
2) contrôle par les UV des performances du traitement par adsorption sur charbon actif en grain au taux de traitement préalablement défini (Tx) afin de déterminer la masse ou le volume de charbon actif en grain nécessaire et suffisant(e) dans le réacteur pour obtenir ledit %MP_{f}.

Le contrôle des performances du traitement par adsorption sur charbon actif en grain comprend les étapes suivantes ;
(1) mesurer l'absorbance à une longueur d'onde donnée λ des eaux avant traitement par adsorption sur charbon actif en grain (A_{λAvTx});
(2) mesurer l'absorbance à la même longueur d'onde λ des eaux après traitement par adsorption sur charbon actif en grain (A_{λApTx}); et
(3) calculer le rendement d'abattement UV (%UV_{c}) à partir des absorbances mesurées avant et après traitement (%UV_{c} = ((A_{λAvTx} - A_{λApTx}) / A_{λAvTx}) *100).

Les étapes (1), (2), et (3) permettant de contrôler le rendement d'abattement UV (%UV_{c}) sont avantageusement répétées dans le temps. De manière avantageuse, le contrôle du rendement d'abattement UV_{c} est effectué de manière continue ou régulière. Lorsque le contrôle est effectué de manière régulière, il est avantageusement effectué au moins une fois par jour.

De manière avantageuse, le pourcentage d'abattement des micropolluants (%Mp) fixé est compris entre 50 et 100% pour les eaux urbaines.

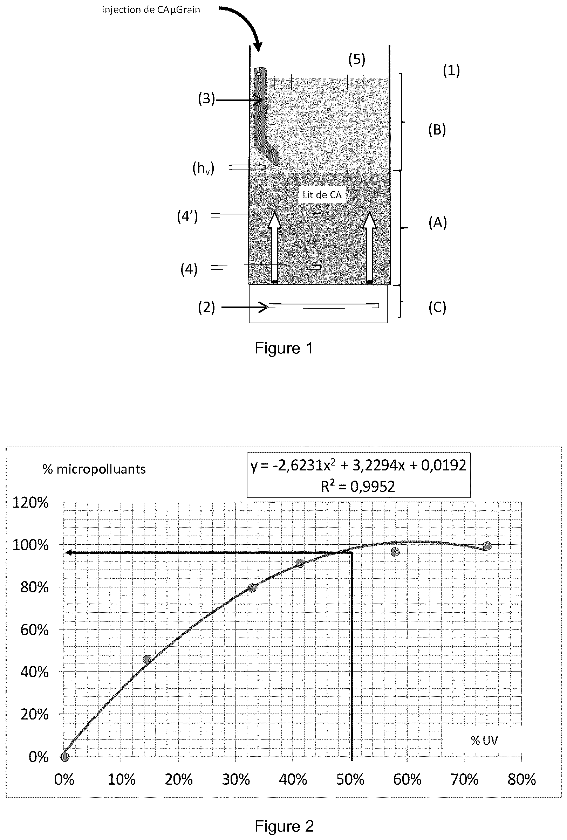

Selon l'invention, le pourcentage d'abattement des micropolluants préalablement fixé (%MP_{f}) permet dans un premier temps de déterminer le rendement d'abattement UV (%UV_{f}), en utilisant la relation %MP=f(%UV) (Figure 2), ladite relation étant préalablement déterminée pour lesdites eaux.

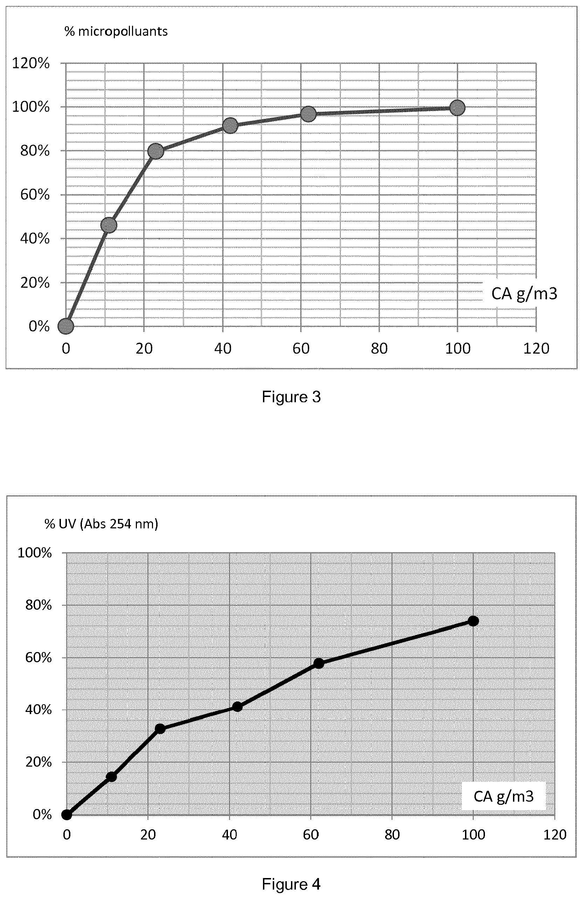

La relation %Mp=f(%UV) permettant de déterminer le rendement d'abattement UV (%UV_{f}) à partir dudit %MP_{f}, est déterminée de la manière suivante :
(i) prélever des échantillons desdites eaux;
(ii) sélectionner un ou plusieurs micropolluants organiques à quantifier dans lesdits échantillons ;
(iii) mesurer la concentration effective du ou des micropolluants organiques sélectionnés à l'étape (ii) dans lesdits échantillons et mesurer l'absorbance desdits échantillons à la dite longueur d'onde λ ;
(iv) traiter lesdits échantillons par mise en contact avec des doses croissantes de charbon actif en grain ;
(v) mesurer, pour chaque dose de charbon actif testée, la concentration effective du ou des micropolluants organiques sélectionnés à l'étape (ii) dans lesdits échantillons après traitement selon l'étape (iv) ;
(vi) mesurer, pour chaque dose de charbon actif testée, l'absorbance desdits échantillons après traitement selon l'étape (iv) à la dite longueur d'onde λ ;
(vii) déterminer, pour chaque dose de charbon actif testée, le pourcentage d'abattement des micropolluants (%MP) et le rendement d'abattement UV (%UV) pour obtenir ainsi les relations %MP=f(Tx) (Figure 3) et %UV=f(Tx) (Figure 4);
(viii) déterminer l'équation de la relation %MP=f(%UV) (Figure 2), exprimant le pourcentage d'abattement des micropolluants (%MP) en fonction du rendement d'abattement UV (%UV). La mesure de l'absorbance des échantillons avant et après dépollution par adsorption sur charbon actif selon les étapes (iii) et (vi) est typiquement réalisée au moyen d'un spectrophotomètre.

Le traitement des échantillons selon l'étape (iv) est réalisé par mise en contact des échantillons avec des doses croissantes de charbon actif. En général, au moins quatre doses de charbon actif sont testées. Le temps de contact peut varier de 15 à 120 minutes, de préférence il est de 60 minutes. Durant le temps de contact, les échantillons sont avantageusement agités.

La mesure des concentrations effectives des micropolluants selon les étapes (iii) et (v) est réalisée selon des méthodes bien connues de l'homme du métier. Ainsi, les concentrations effectives du ou des micropolluants sélectionnés peuvent être déterminées par chromatographie en phase liquide ou en phase gazeuse.

Les pourcentages d'abattement des micropolluants (%Mp_{dose1 ;} %Mp_{dose2}, %M_{Pdose3}) et les rendements d'abattement UV (%UV_{dose1,} %UV_{dose2,} %UV_{dose3}) en fonction des doses de charbon actif en grain (dose 1, dose 2, dose 3) sont déterminés par simple calcul. Les valeurs obtenues peuvent être représentées sur un graphique avec en abscisse les rendement d'abattement UV et en ordonnée les pourcentages d'abattement des micropolluants ((%UV_{dose1} ; %Mp_{dose1}), (%UV_{dose2} ; %Mp_{dose2}), ((%UV_{dose3} ; %Mp_{dose3}),etc). Le graphique permet à terme de déterminer l'équation de la relation exprimant le pourcentage d'abattement des micropolluants (%Mp ) en fonction du rendement d'abattement (%UV) (Figure 2).

### Contrôle des performances

Lorsque les eaux sont des eaux usées industrielles, par exemple provenant des industries chimiques ou pharmaceutiques, l'étape (ii) décrite ci-dessus comprend typiquement la sélection du micropolluant ou des micropolluants organiques que le traitement par adsorption sur charbon actif vise spécifiquement à éliminer. En effet, la nature du ou des micropolluant(s) susceptible(s) d'être contenu(s) dans les eaux usées industrielles est bien souvent connue, rendant ainsi aisé le contrôle et/ou le suivi de ce, ou ces, micropolluant(s).

Par ailleurs, lorsque les eaux sont des eaux usées industrielles, la dépollution par adsorption sur charbon actif auquel il est fait référence aux étapes 1) et 2) peut être réalisée en amont ou en aval d'une installation de traitement biologique des eaux usées. Ainsi, dans le procédé selon l'invention, les eaux usées peuvent être des eaux usées industrielles préalablement dépolluées, ou non, par traitement biologique.

Lorsque les eaux usées sont des eaux usées urbaines, les micropolluants susceptibles d'être contenus dans les eaux usées sont de nature diverse. Cependant, il a été montré que les eaux usées urbaines comprennent de manière récurrente des micropolluants tels que le carbamazepine, l'oxazepam, le diclofenac, l'ibuprofèn, le kétoprofène, le furosemide, l'atanolol, le propanolol, le sulfamethoxazole et le benzotriazole. Ainsi, lorsque les eaux usées sont des eaux usées urbaines, l'étape (ii) décrite ci-avant comprend la sélection de ces micropolluants et les étapes (iii) et (v) comprennent la mesure de la concentration effective totale de ces micropolluants. Des micropolluants autres que ceux précédemment listés peuvent en outre être quantifiés.

Etant donné qu'une partie des eaux à potabiliser provient des rejets de stations d'épuration urbaines ou industrielles, les micropolluants retrouvés de manière récurrente dans ces eaux usées sont également retrouvées dans les eaux à potabiliser.

Le procédé selon l'invention est tout particulièrement adapté à la dépollution des eaux contenant des micropolluants organiques tels que la carbamazepine, l'oxazepam, le diclofenac, l'ibuprofèn, le kétoprofène, le furosemide, l'atanolol, le propanolol, le sulfamethoxazole et le benzotriazole.

De manière avantageuse, les mesures d'absorbances avant traitement (A_{λAvTx}) et après traitement (A_{λApTx}) des eaux dans le réacteur de traitement (étapes (1) et (2)) peuvent être mesurées au moyen de sondes UV ou photomètre tels que décrits dans la demande de brevet FR3009789.

Le taux de traitement en charbon actif en grain (Tx) à injecter dans le réacteur est déterminé en utilisant les relations %MP=f(Tx) et/ou %UV=f(Tx), lesdites relations étant obtenues à partir des étapes (i) à (vii) précédemment citées.

La longueur d'onde λ est de préférence choisie dans le domaine de l'ultraviolet (200-380 nm), de préférence de 200 à 300 nm. Tout particulièrement, l'absorbance peut être mesurée à 254 nm.

Typiquement, le taux de traitement en charbon actif en grain est un taux usuel fixé pour les eaux usées urbaines, le taux étant compris entre 5 et 30g/m³, avantageusement entre 10 et 25g/m³. Pour les eaux usées industrielles, le taux est déterminé par l'intermédiaire des relations %MP=f(Tx) (Figure 3) et %UV=f(Tx) (Figure 4), et est compris typiquement entre 50 et 1000g/m³.

Une fois que le taux de traitement en charbon actif (Tx) à appliquer dans le réacteur de traitement pour obtenir le pourcentage d'abattement des micropolluants fixé (%MP_{f}) est déterminé à partir des relations %Mp=f(%UV) et %UV=f(Tx), le réacteur est mis en service par injection des eaux à une vitesse ascensionnelle comprise entre 7 et 20 m³/m².h, avantageusement entre 12 et 15 m³/m².h, de manière à obtenir une suspension dense de charbon actif dans un réacteur de traitement à flux ascendant et lit expansé surmontée d'une hauteur d'eau claire décantée.

Selon un premier mode de réalisation particulier, le réacteur de traitement est initialement vide. Dans ce cas, la détermination de ladite masse ou dudit volume de charbon actif en grain nécessaire et suffisant(e) dans le réacteur pour obtenir ledit %MP_{f} préalablement fixé, comprend au moins les étapes suivantes :
a) injection journalière de charbon actif en grain au taux de traitement (Tx) préalablement défini dans le réacteur de traitement initialement vide, puis
b) contrôle (continu ou régulier), avantageusement au moins une fois par jour, du rendement d'abattement UV_{c} (%UV_{c}), et
c) obtention du volume de charbon actif en grain nécessaire et suffisant(e) lorsque ledit %UV_{c} est tel que : %UV_{c}=%UV_{f} ± 20%(%UV_{f}), avantageusement %UV_{c}=%UV_{f} ± 10%(%UV_{f}), pendant au moins 5 jours, avantageusement 5 à 10 jours, et extraction de charbon actif en grain expansé de manière à conserver ledit volume de charbon actif en grain nécessaire et suffisant(e) dans le réacteur.

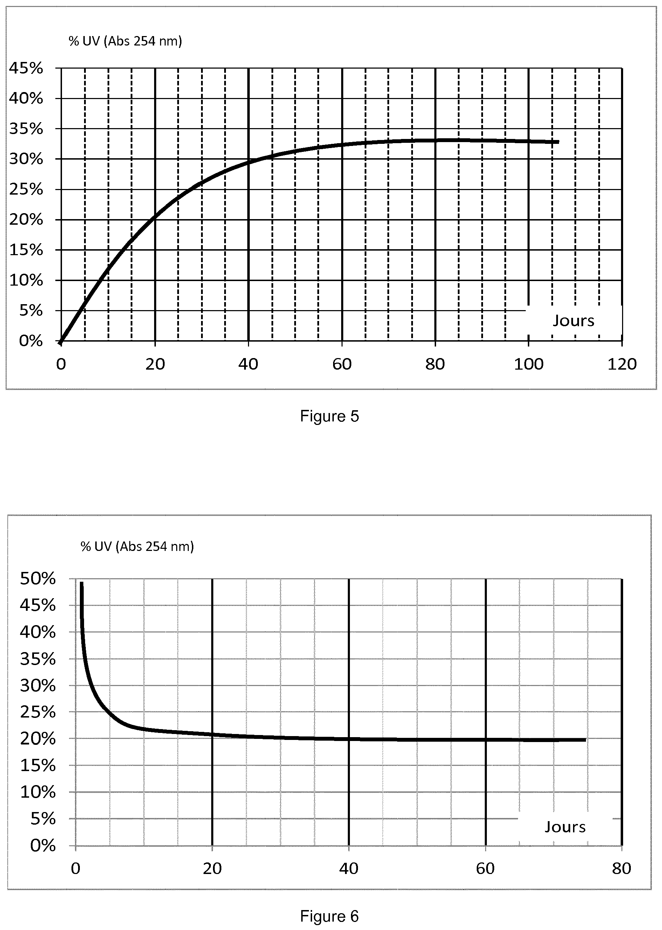

L'injection journalière de charbon actif en grain dans le réacteur permet d'augmenter la quantité de charbon actif présente dans ce dernier afin de se rapprocher de la masse ou du volume nécessaire et suffisant(e) pour obtenir le pourcentage d'abattement des micropolluants organiques préalablement fixé (%Mp) (Figure 5).

Ainsi, lorsque le %UV_{c} ne varie quasiment plus au cours du temps, (tel que %UV_{c}=%UV_{f} ± 20%(%UV_{f}) pendant au moins 5 jours, avantageusement 5 à 10 jours), le régime du réacteur de traitement est considéré comme étant stabilisé et la masse ou le volume de charbon actif en grain présent dans le réacteur est nécessaire et suffisant(e) (optimal(e)) pour obtenir ledit %MP_{f} (Figure 5). Afin de conserver ladite masse ou ledit volume nécessaire et suffisant(e), on réalise une extraction de charbon actif en grain correspondant à la quantité de charbon actif en grain injectée quotidiennement. L'injection et l'extraction assurent ainsi le renouvellement du charbon actif en grain.

De manière avantageuse, l'injection journalière de charbon actif en grain dans le réacteur de traitement est réalisée en une fois ou en plusieurs fois par jour.

De manière avantageuse, l'extraction permet d'extraire le charbon actif en grain à partir du moment où la masse ou le volume de charbon actif en grain nécessaire et suffisant(e) pour obtenir ledit %MP_{f} a été obtenu. Avantageusement, l'extraction est réalisée 1 à 7 fois par semaine.

Selon un second mode de réalisation particulier, le réacteur contient une charge initiale de charbon actif en grain de manière à obtenir au moins le pourcentage d'abattement des micropolluants préalablement fixé (%MP_{f}) dès la mise en service du réacteur. Dans ce cas, la détermination de ladite masse ou dudit volume de charbon actif en grain nécessaire et suffisant(e) dans le réacteur pour obtenir ledit %MP_{f} préalablement fixé, comprend au moins les étapes suivantes :
a') préalablement à la mise en service du réacteur de traitement, introduction d'une charge initiale de charbon actif en grain dans le réacteur, ladite charge représentant une hauteur de lit de charbon comprise entre 20 et 50 cm, avantageusement 30 cm, et ladite charge étant choisie de manière à obtenir au moins le pourcentage d'abattement des micropolluants préalablement fixé (%MP_{f}), puis
b') contrôle (continu ou régulier), avantageusement au moins fois par jour, du rendement d'abattement UV_{c} (%UV_{c}),
c') lorsque ledit %UV_{c} est tel que: %UV_{f} ≤ %UV_{c} ≤ %UV_{f} + 15%, injection journalière de charbon actif en grain dans le réacteur puis
d') contrôle du rendement d'abattement UV_{c} (%UV_{c}) jusqu'à obtention du volume nécessaire et suffisant(e) de charbon actif en grain lorsque ledit %UV_{c} est tel que : %UV_{c}=%UV_{f} ± 20%(%UV_{f}) pendant au moins 5 jours, avantageusement 5 à 10 jours, et extraction de charbon actif en grain expansé de manière à conserver ledit volume de charbon actif en grain nécessaire et suffisant(e) dans le réacteur.

Ainsi, le début de l'injection journalière de charbon actif dans le réacteur est déterminée par contrôle UV et débute lorsque le %UV_{c} est tel que : %UV_{f} ≤ %UV_{c} ≤ %UV_{f} + 15%. Une fois l'injection journalière de charbon actif commencée, le contrôle UV permet de déterminer quand la masse ou le volume de charbon actif en grain présent dans le réacteur est considéré(e) comme optimal(e) (nécessaire et suffisant(e)) pour obtenir ledit %MP_{f}. La masse ou le volume est considéré(e) comme optimal(e) lorsque ledit %UV_{c} est tel que : %UV_{c}=%UV_{f} ± 20%(%UV_{f}) pendant au moins 5 jours, avantageusement 5 à 10 jours (Figure 6). Afin de conserver ladite masse ou ledit volume nécessaire et suffisant(e), on réalise une extraction de charbon actif en grain correspondant à la quantité de charbon actif en grain injectée quotidiennement. L'injection et l'extraction assurent ainsi le renouvellement du charbon actif en grain. Avantageusement, le taux de traitement en charbon actif injecté dans l'étape c') peut être augmenté afin d'accélérer la mise en service.

De manière avantageuse, l'injection journalière de charbon actif en grain dans le réacteur de traitement est réalisée en une fois ou en plusieurs fois par jour.

De manière avantageuse, l'extraction permet d'extraire le charbon actif en grain à partir du moment où la masse ou le volume de charbon actif en grain nécessaire et suffisant(e) pour obtenir ledit %MP_{f} a été obtenu. Avantageusement, l'extraction est réalisée 1 à 7 fois par semaine.

Le contrôle des UV permet de suivre le maintien des performances du procédé selon l'invention.

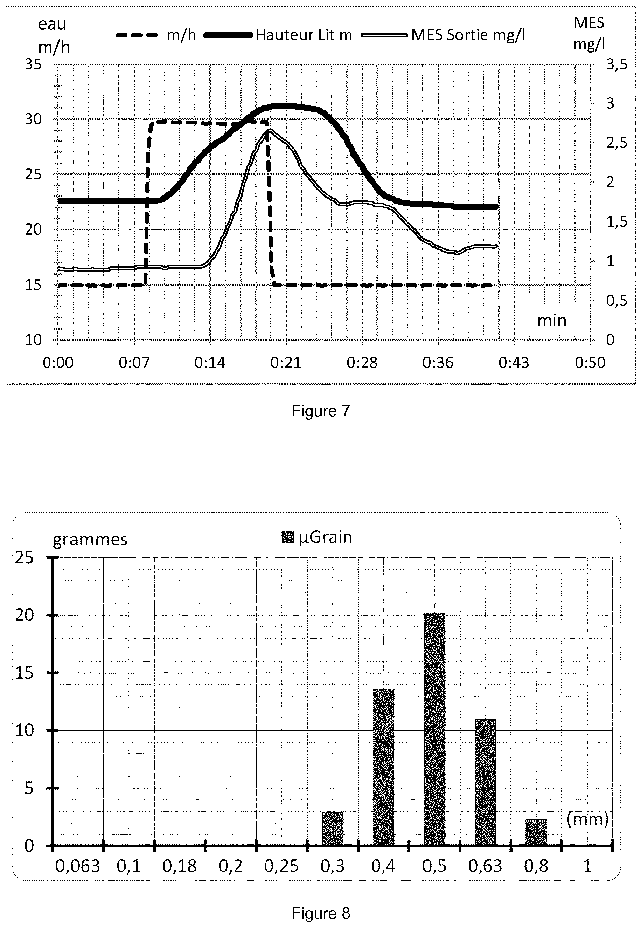

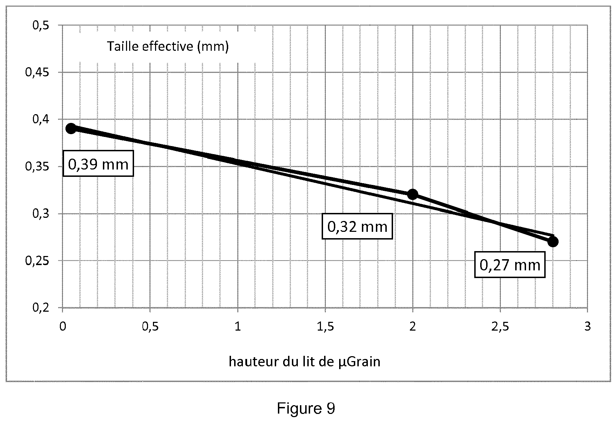

De manière avantageuse, l'extraction de charbon actif en grain expansé est réalisée à partir d'au moins deux niveaux d'extraction (4 et 4') (Figure 1) du lit de charbon actif. Lors de l'expansion du charbon actif, un gradient de concentration décroissant, du bas du réacteur vers le haut, est généralement créé au sein du lit de charbon actif. Le gradient de concentration varie en fonction de la répartition granulométrique du charbon actif utilisé. La vitesse de décantation des grains étant proportionnelle à la granulométrie des grains (comprise entre 0,3 et 1 mm) (Figure 8), la répartition de ces derniers dans le lit s'effectue donc des plus gros en bas aux plus petits en haut (Figure 9). Le temps d'épuisement ou de saturation du charbon actif étant proportionnel au diamètre des particules des grains, il est important lors de l'extraction de garder les grains les plus gros plus longtemps que les petits. Ainsi, plus le nombre de niveaux d'extraction sur la hauteur du lit est élevé, plus l'extraction est optimisée. Typiquement, une extraction est réalisée à partir d'au moins deux niveaux d'extraction du lit de charbon actif, un niveau étant situé dans la partie supérieure du lit de charbon pour extraire les grains les plus fins et un autre niveau dans la partie inférieure pour extraire les grains les plus gros.

Avantageusement, les hauteurs d'extraction sont comprises entre 1,5 et 2 m, encore plus avantageusement à 2 m pour le niveau d'extraction dans la partie supérieure du lit de charbon et entre 0,1 et 1 m, encore plus avantageusement à 0,5 m pour le niveau d'extraction située dans la partie inférieure du lit de charbon.

Avantageusement, la fréquence des extractions pour un même volume ou masse de charbon est proportionnellement déterminée en fonction des tailles effectives des grains, soit typiquement une extraction pour le niveau inférieur et deux pour le niveau supérieur.

De manière avantageuse, le procédé de dépollution selon l'invention comprend au moins une étape de lavage du charbon actif en grain utilisé. Typiquement, le lavage du charbon actif peut être effectué à l'intérieur du réacteur de traitement, notamment par insufflation d'air et d'eau de lavage à la base du réacteur. On utilise avantageusement le circuit d'alimentation d'eau à traiter pour l'introduction d'eau de lavage à la base du réacteur ou une pompe de recirculation en supplément du débit d'alimentation. L'air de lavage est injecté par le même circuit d'alimentation d'eau ou avec son propre dispositif de rampe et de ramifications.

Avantageusement, l'étape de lavage du lit de charbon actif est réalisée lorsque la hauteur mesurée du lit de charbon actif est supérieure de 20% à la hauteur théorique en régime stabilisé. Typiquement, une hauteur théorique est déterminée pour une vitesse donnée en régime stabilisé, la hauteur d'expansion du lit dépendant de la vitesse ascensionnelle. Avantageusement, la mesure de la hauteur du lit de charbon actif est réalisée de manière journalière ou en continu.

De manière avantageuse, le lavage est réalisé quand hₑ ≥ hₚ + 10 à 50%(hₚ), avantageusement hₑ ≥ hₚ + 10 à 20%(hₚ), hₑ représentant la hauteur du lit expansé sale et hₚ la hauteur du lit lavé. Le lit expansé sale correspondant au lit contenant les MES et le lit lavé correspondant au lit sans les MES.

De manière avantageuse, l'étape de lavage comprend une phase d'expansion et une phase de décantation.

Le lit de charbon actif formé par l'accumulation des doses injectées a la faculté de retenir une grande partie des matières en suspension (MES) qui entrent dans le réacteur de traitement. Par ailleurs, l'âge de ce charbon actif qui reste dans le réacteur favorise le développement d'un biofilm. Il est nécessaire d'évacuer ces MES et ce biofilm car sans extraction de ces derniers, une augmentation du volume du lit peut causer une fuite de MES et/ou de charbon actif. L'objectif de ce lavage est de séparer ces MES du charbon sans pour autant le détériorer. Le charbon étant un matériau peu dense (densité apparente inférieure à 0,7), la phase d'expansion consiste à appliquer au lit de charbon actif une vitesse ascensionnelle avantageusement comprise entre 20 et 50 m³/m².h et plus avantageusement 30 m³/m².h, permettant la séparation du charbon actif des matières en suspension présentes dans les eaux et ainsi une expansion suffisante du charbon afin que les MES migrent au-dessus du lit.

De manière avantageuse, la durée de l'expansion est comprise entre 5 et 15 minutes, avantageusement entre 7 et 11 minutes, et avantageusement ledit lavage est réalisé 1 à 7 fois par semaine, encore plus avantageusement 1 à 3 fois par semaine.

Une fois la phase d'expansion de l'étape de lavage terminée, une phase de décantation puis une phase de vidange de la partie supérieure du lit de charbon (zone de séparation (B)) (Figure 1) sont nécessaires pour extraire les MES.

La phase de décantation permet de faire décanter les MES et le charbon actif en grain expansé lors de la phase d'expansion. Selon un mode de réalisation particulier, la phase de décantation de l'étape de lavage peut être réalisée avec le réacteur fonctionnant à une vitesse ascensionnelle minimum permettant une décantation efficace, ladite vitesse étant avantageusement inférieure ou égale à 15 m³/m².h ou avec le réacteur à l'arrêt. Lorsque le réacteur est à l'arrêt, ledit arrêt a une durée comprise entre 3 et 10 min, avantageusement 5 min.

Suite à la phase de décantation, une phase de vidange permettant une évacuation de la tranche d'eau comprenant les MES est effectuée typiquement vers un poste toutes eaux et/ou une benne d'égouttage du charbon à partir d'une vanne d'évacuation située à une hauteur de vidange (hᵥ) (Figure 1). De manière avantageuse, la phase de vidange a une durée comprise entre 5 et 30 minutes, avantageusement entre 5 et 10 minutes.

Une fois la vidange de la tranche d'eau comprenant les MES terminée, une phase de rinçage est typiquement effectuée par la reprise de l'alimentation au débit précédent l'étape de lavage par injection des eaux en partie inférieure du réacteur de traitement. Lors de la phase de rinçage, la vanne de vidange est ouverte pour permettre l'évacuation de l'intégralité de l'eau injectée en partie inférieure du réacteur, ainsi l'eau ne passe en aucun cas en surverse par les goulottes. La phase de rinçage a avantageusement une durée comprise entre 5 et 20 minutes, avantageusement entre 5 et 10 minutes. Une fois cette phase de rinçage terminée, la vanne de vidange est fermée tout en conservant le débit d'alimentation pour une reprise du traitement.

Le lavage permet d'éviter que les MES se mettent à l'intérieur du lit et le gonflent, ceci pouvant provoquer une perte brutale du charbon actif en grain, ce qui peut entrainer une baisse de la qualité du traitement. Ainsi, le réacteur comprend en plus des moyens d'injection (3) de charbon actif neuf, des moyens d'extraction (4 et 4') de charbon actif usagé. Les moyens d'extraction de charbon actif usagé sont généralement compris dans la zone réactionnelle (A) comprenant le lit de charbon expansé (Figure 1).

### Le réacteur de traitement :

Tout particulièrement, le traitement peut être réalisé au sein d'un réacteur de traitement tel que décrit dans le brevet FR2874913.

La mise en contact des eaux avec du charbon actif en grain permet l'élimination des micropolluants organiques d'origine naturelle ou synthétique, tels que les résidus de produits phytosanitaires, pesticides, molécules pharmaceutiques, par adsorption des micropolluants sur les particules de charbon actif en grain.

Typiquement, le traitement est réalisé dans un réacteur de traitement (1) à lit expansé de charbon actif en grain fonctionnant en flux ascendant et comprenant deux zones distinctes de fonctionnement :
- une zone réactionnelle (A) en partie inférieure du réacteur constituée d'un lit expansé de charbon actif assurant l'élimination des micropolluants organiques par adsorption de ceux-ci sur les particules de charbon actif en grain; et
- une zone de séparation (B) en partie haute du réacteur assurant la séparation et la collecte des eaux dépolluées.

Un tel réacteur est représenté à la figure 1.

Avantageusement, le réacteur comprend également une zone aménagée (C) située sous la zone réactionnelle assurant l'admission et la répartition homogène des eaux à traiter. Une rampe de distribution (2) des eaux est présente dans la zone aménagée.

Typiquement, la zone aménagée contient un lit bloquant, tel qu'un lit de graviers surmonté d'un lit de sable. Le lit bloquant permet d'éviter que le charbon actif en grain ne rentre dans la rampe de distribution. Par ailleurs, le lit bloquant permet d'assurer une répartition homogène des eaux au fond du réacteur et permet d'assurer une mise en suspension homogène du lit de charbon actif au sein de la zone réactionnelle, évitant ainsi toute zone d'eaux mortes au voisinage de la base du lit de charbon. La hauteur de la zone aménagée est établie en fonction de l'encombrement en hauteur de la rampe de distribution et de son positionnement en fond d'ouvrage. Tout particulièrement, sa hauteur peut être comprise entre 25 et 30 cm au-dessus de l'admission des eaux.

La rampe de distribution est choisie et agencée de manière à distribuer les eaux de manière homogène à la base du réacteur. Une bonne répartition des eaux peut tout particulièrement être obtenue lorsque la rampe de distribution est un distributeur sur lequel sont disposés des jeux de ramifications équidistantes et percées d'orifices à intervalles identiques, de préférence dirigés vers le fond en quinconce alterné. La rampe de distribution est généralement noyée au sein d'un lit de graviers.

Lorsque le réacteur est en fonctionnement, le débit des eaux injectées en partie inférieure du réacteur par la rampe de distribution permet la mise en suspension (ou expansion) et le maintien en suspension du charbon actif en grain. Au sein du lit de charbon actif, en particulier dans sa partie inférieure, la concentration en charbon actif peut atteindre plusieurs centaines de grammes par litre et exercer efficacement une action dépolluante, sans engendrer de colmatage, ni de perte de charge, comme cela peut être le cas avec l'utilisation de systèmes à lit fixe de charbon actif. Généralement, la concentration moyenne en charbon actif au sein du lit expansé est de 100 à 450 g/l. Elle est généralement inférieure ou égale à 2 mg/l en partie supérieure de la zone de séparation. La hauteur de la zone de séparation (B) varie typiquement de 0,5 m à 2,0 m. Elle est généralement proche de 1,5 m. Par ailleurs, aucun additif de traitement autre que le charbon, tel que des agents de coagulation ou de floculation pour lester les particules de charbon, n'a besoin d'être ajouté dans le procédé selon la présente invention. Cependant, dans certains modes de réalisation, des agents de coagulation ou de floculation peuvent être ajoutés en amont du réacteur dans les eaux usées afin d'améliorer l'efficacité de l'abattement en matières organiques et micropolluants organiques.

Typiquement, la hauteur du lit expansé de charbon actif en grain de la zone réactionnelle est comprise entre 1 et 2 m, avantageusement 1,5 m.

La granulométrie du charbon actif en grain et la vitesse ascensionnelle des eaux sont choisies de manière à obtenir une suspension de charbon actif sous forme de lit expansé, surmontée d'une hauteur d'eau dépolluée correspondant à la zone de séparation. Le terme "vitesse ascensionnelle" désigne le rapport du débit hydraulique des eaux injectées dans le réacteur sur la surface au sol du réacteur de traitement.

Avantageusement, la granulométrie du charbon actif en grain est comprise entre 100 et 1000 µm, plus avantageusement entre 300 et 800 µm, encore plus avantageusement entre 600 et 800 µm. De manière avantageuse, plusieurs types de charbons actifs de différentes granulométries ou densités peuvent être utilisés dans le même réacteur (Figure 8). La présente invention permet ainsi de traiter une grande variété de micropolluants présents dans les eaux avec des degrés d'adsorbabilité variables suivant les charbons employés.

Dans un mode de réalisation particulier de la présente invention la granulométrie du charbon actif en grain est comprise entre 300 et 1000 µm, plus avantageusement entre 600 et 800 µm, et/ou la vitesse ascensionnelle des eaux varie 7 à 20 m³/m².h, plus avantageusement de 12 à 15 m³/m².h

Le temps de contact des eaux avec le charbon actif est défini en fonction de la vitesse ascensionnelle des eaux et de la hauteur du lit de charbon expansé. Le temps de contact varie généralement de 5 à 60 min, avantageusement de 5 à 30 min, encore plus avantageusement de 8 à 15 min.

Dans un mode de réalisation particulier, l'injection de charbon actif en grain neuf dans le réacteur est typiquement réalisée au-dessus du lit de charbon (en expansion), de préférence par un ou plusieurs systèmes d'injection (3) typiquement composés d'un tuyau de section comprise entre 100 et 200 mm selon les quantités de charbon actif en grain à introduire.

Avantageusement, l'injection de charbon actif en grain neuf est réalisée à l'aide d'un hydroéjecteur qui permet d'amener le charbon actif en partie supérieure du réacteur (zone de séparation (B)). Le ou les système(s) d'injection (3), notamment une ou des canne(s) d'injection, sont placés parallèlement aux parois du réacteur et se termine(nt) par un coude à 45° qui se situe toujours au-dessus du lit de charbon actif en expansion. Typiquement, le coude se situe entre 1,5 et 2 m en dessous du niveau d'évacuation des eaux de traitement (goulottes de reprise (5)). Typiquement, l'extrémité de ce ou ces tuyau(x) d'injection est (sont) de façon à former un biseau qui facilitera l'écoulement de charbon actif vers la surface du lit de ce charbon actif. L'avantage de ce système réside dans le fait qu'un colmatage de cet équipement est difficile, voire impossible.

L'expression « charbon actif neuf » désigne, par opposition à l'expression « charbon actif usagé ou expansé », du charbon actif n'ayant pas été mis en contact avec des micropolluants organiques.

Les eaux dépolluées et décantées peuvent être recueillies par surverse en partie supérieure du réacteur. Les goulottes de reprise (5) sont disposées en partie haute du réacteur. Le réacteur de traitement à flux ascendant et lit expansé peut en outre comprendre des moyens de recirculation d'eau dépolluée à l'intérieur du réacteur, afin de garder une vitesse suffisante d'expansion ou de fluidisation permettant une expansion minium du lit de charbon pour éviter que le réacteur ne se dégrade pendant les phases d'arrêt de production.

Selon l'invention, le charbon actif en grain peut être du charbon régénérable ou réactivable. Le charbon actif en grain usagé est alors extrait puis stocké avant d'être envoyé dans des centres de réactivation ou régénération par voie thermique essentiellement.

De manière avantageuse, le procédé de dépollution selon l'invention est adaptée aux eaux usées et aux eaux à potabiliser, encore plus avantageusement aux eaux usées.

### EXEMPLES

On indiquera ci-après à titre de simple illustration, deux exemples particuliers de traitement des eaux selon le procédé de la présente invention, dans un réacteur de traitement tel que décrit dans la présente demande (Figure 1), en relation avec les figures 1, 2, 3, 4, 5 et 6. Les conditions particulières mentionnées ci-après ont conduit à des résultats particulièrement satisfaisants dans le cadre de cette invention.

### Exemple 1 : Réacteur initialement à vide

1) Pourcentage d'abattement des micropolluants fixé contenues dans les eaux usées : 70-80% ;
2) Détermination du taux de traitement en charbon actif en grain (Tx) à injecter dans le réacteur à l'aide des relations %MP=f(%UV) (figure 2) ; %MP=f(Tx) (figure 3) et %UV=f(Tx) (figure 4). Selon les courbes obtenues, le pourcentage d'abattement des micropolluants de 70-80% correspond à un pourcentage d'abattement UV d'environ 30% et est obtenu avec un taux de traitement en charbon actif en grain de 20g/m³ ;
3) Injection journalière de 20g/m³ (correspondant à 120g dans le cas de cette installation) de charbon actif en grain dans un réacteur de traitement initialement vide au-dessus du lit de charbon actif en partie supérieure du réacteur par l'intermédiaire d'une canne d'injection ;
4) Contrôle journalier du rendement d'abattage UV_{c}(%UV_{c}). Le graphique de la figure 5 montre l'évolution du %UV_{c} au cours du temps (c'est-à-dire en fonction des masses de charbon actif en grain injecté quotidiennement) ;
5) A l'aide du graphique de la figure 5, on observe une stabilisation du rendement d'abattage UV_{c}, c'est-à-dire %UV_{c}=30% ± 20% de (30) i.e. %UV_{c} compris entre 24 et 36%, pendant au moins 5 jours à partir du 40^{ème} jour. La masse ou le volume de charbon actif en grain dans le réacteur est alors considéré comme optimal(e), une extraction de charbon actif est alors réalisée une fois par semaine à partir de deux niveaux d'extraction du lit de charbon actif (un premier niveau est situé dans la partie supérieure du lit de charbon, le second niveau est quant à lui situé dans la partie inférieure), la masse ou le volume de charbon extrait correspondant à la masse ou volume de charbon actif introduit entre deux extractions.

### Exemple 2 : Réacteur comprenant une charge initiale de charbon actif

1') Pourcentage d'abattement des micropolluants fixé contenues dans les eaux usées : 55% ;
2') Détermination du taux de traitement en charbon actif en grain (Tx) à injecter dans le réacteur à l'aide des relations %MP=f(%UV) (figure 2) ; %MP=f(Tx) (figure 3) et %UV=f(Tx) (figure 4). Selon les courbes obtenues, le pourcentage d'abattement des micropolluants de 55% correspond à un pourcentage d'abattement UV d'environ 20% et est obtenu avec un taux de traitement en charbon actif en grain de 15g/m³;
3') Dans le cas d'une mise en service où le rendement d'élimination doit être assuré immédiatement, une charge initiale de charbon actif en grain de 2,3kg (correspondant à une hauteur de lit de charbon de 28 cm) est introduite dans le réacteur avant sa mise en fonctionnement ;
4') Contrôle journalier du rendement d'abattage UV_{c} (%UV_{c}). Le graphique de la figure 6 montre l'évolution du %UV_{c} au cours du temps ;
5) Au 5^{ème} jour lorsque %UV_{c} est tel que %UV_{c}=25% c'est-à-dire : 20 ≤ %UV_{c} ≤ 35% (%UV_{f} ≤ %UV_{c} ≤ %UV_{f} + 15%), injection journalière de 15g/m³ (correspondant à 90g dans le cas de cette installation)
6) Toujours à l'aide du graphique de la figure 6, on effectue un contrôle journalier du rendement d'abattage UV_{c} jusqu'à observer une stabilisation du rendement d'abattage UV_{c}, c'est-à-dire lorsque %UV_{c}=20% ± 20% de (20), i.e. %UV_{c} compris entre 16 et 24%, pendant au moins 5 jours. Cette stabilisation est observée à partir du 25^{ème} jour. La masse ou le volume de charbon actif en grain dans le réacteur est alors considéré comme optimal(e), une extraction de charbon actif est alors réalisée une fois par semaine à partir de deux niveaux d'extraction du lit de charbon actif (un premier niveau est situé dans la partie supérieure du lit de charbon, le second niveau est quant à lui situé dans la partie inférieure), la masse ou le volume de charbon extrait correspondant à la masse ou volume de charbon actif introduit entre deux extractions.

On indiquera ci-après à titre de simple illustration, un exemple particulier de l'étape de lavage du lit de charbon actif selon le procédé de la présente invention, en relation avec la figure 7.

### Exemple 3

Le réacteur de traitement selon la présente invention est un réacteur de traitement à flux ascendant, ainsi l'eau à traiter contenant des MES, comme dans la plupart des cas, une accumulation de ces MES se produit. Un lavage comprenant les phases suivantes est alors effectué :
1) Phase d'expansion : augmentation de la vitesse d'expansion ascensionnelle du charbon actif en grain par la mise en service de la pompe de recirculation en supplément du débit d'alimentation. Lors du lavage, la vitesse d'expansion passe de 15 m²/m³.h à 30 m²/m³.h. Cette vitesse recherchée permet une expansion nécessaire et suffisante pour extraire les MES du lit de charbon actif.
2) Phase de décantation : l'arrêt de la phase d'expansion du charbon actif en grain correspondant au début de la phase de décantation est déterminé quand la concentration en MES au niveau des goulottes augmente de quelques mg/l (la concentration en MES passe de 1 à 2,5g/L en 7 minutes (Figure 7)), la concentration en MES étant mesurée par une sonde MES (Solitax de chez LANGE).
3) Phase de vidange : la vanne se trouvant à la hauteur de vidange (hᵥ) est ouverte pendant une durée de 5 minutes pour évacuer la tranche d'eau comprenant les MES correspondant à la zone (B) (Figure 1) vers le poste toutes eaux.
4) Phase de rinçage : reprise de l'alimentation par injection des eaux en partie inférieure du réacteur de traitement à une vitesse ascensionnelle de 15 m²/m³.h pendant une durée de 10 minutes, la vanne de vidange étant ouverte.

## Revendications

1. Procédé de dépollution des eaux, typiquement des eaux usées, contenant des micropolluants organiques par adsorption sur charbon actif en grain dans un réacteur de traitement à flux ascendant, de manière à abattre un pourcentage de micropolluants préalablement fixé (%MP_{f}), comprenant l'injection des eaux en partie inférieure du réacteur contenant un lit de charbon actif de manière à créer une expansion dudit charbon actif en assurant parallèlement la séparation gravitaire entre les eaux dépolluées et les particules de charbon actif et la récupération par surverse des eaux dépolluées et décantées en partie supérieure du réacteur,
**caractérisé en ce que** ledit procédé comprend au moins les étapes suivantes :
détermination du rendement d'abattement UV (%UV_{f}) à partir dudit pourcentage d'abattement des micropolluants préalablement fixé (%MP_{f}), en utilisant la relation %MP=f(%UV), ladite relation étant préalablement déterminée pour lesdites eaux de la manière suivante :
(i) prélever des échantillons desdites eaux;
(ii) sélectionner un ou plusieurs micropolluants organiques à quantifier dans lesdits échantillons ;
(iii) mesurer la concentration effective du ou des micropolluants organiques sélectionnés à l'étape (ii) dans lesdits échantillons et mesurer l'absorbance desdits échantillons à une longueur d'onde donnée A ;
(iv) traiter lesdits échantillons par mise en contact avec des doses croissantes de charbon actif en grain ;
(v) mesurer, pour chaque dose de charbon actif testée, la concentration effective du ou des micropolluants organiques sélectionnés à l'étape (ii) dans lesdits échantillons après traitement selon l'étape (iv) ;
(vi) mesurer, pour chaque dose de charbon actif testée, l'absorbance desdits échantillons après traitement selon l'étape (iv) à une longueur d'onde donnée A ;
(vii) déterminer, pour chaque dose de charbon actif testée, le pourcentage d'abattement des micropolluants (%MP) et/ou le rendement d'abattement UV (%UV) pour obtenir ainsi les relations %MP=f(Tx) et %UV=f(Tx);
(viii) déterminer l'équation de la relation %MP=f(%UV), exprimant le pourcentage d'abattement des micropolluants (%MP) en fonction du rendement d'abattement UV (%UV),
détermination du taux de traitement en charbon actif en grain (Tx) à injecter dans ledit réacteur à partir dudit pourcentage d'abattement des micropolluants préalablement fixé (%MP_{f}), le taux de traitement en charbon actif en grain (Tx) à injecter dans le réacteur étant déterminé en utilisant les relations %MP=f(Tx) et/ou %UV=f(Tx), lesdites relations étant obtenues à partir desdites étapes (i) à (vii), et
détermination du volume de charbon actif en grain nécessaire et suffisant dans le réacteur pour obtenir ledit %MP_{f} par contrôle UV des performances du traitement par adsorption sur charbon actif en grain au taux de traitement préalablement défini (Tx), comprenant au moins les étapes suivantes :
a) injection journalière de charbon actif en grain au taux de traitement (Tx) préalablement défini dans le réacteur de traitement initialement vide, puis
b) contrôle, avantageusement au moins une fois par jour, du rendement d'abattement UV_{c} (%UV_{c}), ledit contrôle comprenant les étapes suivantes :
(1) mesure de l'absorbance à une longueur d'onde donnée A des eaux avant traitement par adsorption sur charbon actif en grain (A_{λAvTx});
(2) mesure de l'absorbance à la même longueur d'onde A des eaux après traitement par adsorption sur charbon actif en grain (A_{λAPTx}); et
(3) calcul du rendement d'abattement UV (%UV_{c}) à partir des absorbances mesurées avant et après traitement (%UV_{c} = ((A_{λAVTx} - A_{λApTx}) / A_{λAvTx}) *100),
c) obtention du volume de charbon actif en grain nécessaire et suffisant lorsque ledit %UV_{c} est tel que : %UV_{c}=%UV_{f} ± 20%(%UV_{f}) pendant au moins 5 jours, avantageusement 5 à 10 jours, et extraction de charbon actif en grain expansé de manière à conserver ledit volume de charbon actif en grain nécessaire et suffisant dans le réacteur.

2. Procédé de dépollution des eaux, typiquement des eaux usées, contenant des micropolluants organiques par adsorption sur charbon actif en grain dans un réacteur de traitement à flux ascendant, de manière à abattre un pourcentage de micropolluants préalablement fixé (%MP_{f}), comprenant l'injection des eaux en partie inférieure du réacteur contenant un lit de charbon actif de manière à créer une expansion dudit charbon actif en assurant parallèlement la séparation gravitaire entre les eaux dépolluées et les particules de charbon actif et la récupération par surverse des eaux dépolluées et décantées en partie supérieure du réacteur,
**caractérisé en ce que** ledit procédé comprend au moins les étapes suivantes :
détermination du rendement d'abattement UV (%UV_{f}) à partir dudit pourcentage d'abattement des micropolluants préalablement fixé (%MP_{f}), en utilisant la relation %MP=f(%UV), ladite relation étant préalablement déterminée pour lesdites eaux de la manière suivante :
(i) prélever des échantillons desdites eaux;
(ii) sélectionner un ou plusieurs micropolluants organiques à quantifier dans lesdits échantillons ;
(iii) mesurer la concentration effective du ou des micropolluants organiques sélectionnés à l'étape (ii) dans lesdits échantillons et mesurer l'absorbance desdits échantillons à une longueur d'onde donnée A ;
(iv) traiter lesdits échantillons par mise en contact avec des doses croissantes de charbon actif en grain ;
(v) mesurer, pour chaque dose de charbon actif testée, la concentration effective du ou des micropolluants organiques sélectionnés à l'étape (ii) dans lesdits échantillons après traitement selon l'étape (iv) ;
(vi) mesurer, pour chaque dose de charbon actif testée, l'absorbance desdits échantillons après traitement selon l'étape (iv) à une longueur d'onde donnée A ;
(vii) déterminer, pour chaque dose de charbon actif testée, le pourcentage d'abattement des micropolluants (%MP) et/ou le rendement d'abattement UV (%UV) pour obtenir ainsi les relations %MP=f(Tx) et %UV=f(Tx);
(viii) déterminer l'équation de la relation %MP=f(%UV), exprimant le pourcentage d'abattement des micropolluants (%MP) en fonction du rendement d'abattement UV (%UV),
détermination du taux de traitement en charbon actif en grain (Tx) à injecter dans ledit réacteur à partir dudit pourcentage d'abattement des micropolluants préalablement fixé (%MP_{f}), le taux de traitement en charbon actif en grain (Tx) à injecter dans le réacteur étant déterminé en utilisant les relations %MP=f(Tx) et/ou %UV=f(Tx), lesdites relations étant obtenues à partir desdites étapes (i) à (vii), et
détermination du volume de charbon actif en grain nécessaire et suffisant dans le réacteur pour obtenir ledit %MP par contrôle UV des performances du traitement par adsorption sur charbon actif en grain au taux de traitement préalablement défini (Tx), comprenant au moins les étapes suivantes :
a') préalablement à la mise en service du réacteur de traitement, introduction d'une charge initiale de charbon actif en grain dans le réacteur, ladite charge représentant une hauteur de lit de charbon comprise entre 20 et 50 cm, avantageusement 30 cm, et ladite charge étant choisie de manière à obtenir au moins le pourcentage d'abattement des micropolluants préalablement fixé (%MP_{f}), puis
b') contrôle, avantageusement au moins fois par jour, du rendement d'abattement UV_{c} (%UV_{c}), ledit contrôle comprenant les étapes suivantes :
(1) mesure de l'absorbance à une longueur d'onde donnée A des eaux avant traitement par adsorption sur charbon actif en grain (A_{λAvTx});
(2) mesure de l'absorbance à la même longueur d'onde A des eaux après traitement par adsorption sur charbon actif en grain (A_{λApTx}); et
(3) calcul du rendement d'abattement UV (%UV_{c}) à partir des absorbances mesurées avant et après traitement (%UV_{c} = ((A_{λAvTx} - A_{λApTx}) / A_{λAvTx}) *100),
c') lorsque ledit %UV_{c} est tel que : %UV_{f} ≤ %UV_{c} ≤ %UV_{f} + 15%, injection journalière de charbon actif en grain au taux de traitement (Tx) préalablement défini dans le réacteur puis
d') contrôle du rendement d'abattement UV_{c} (%UV_{c}) jusqu'à obtention du volume nécessaire et suffisant de charbon actif en grain lorsque ledit %UV_{c} est tel que : %UV_{c}=%UV_{f} ± 20%(%UV_{f}) pendant au moins 5 jours, avantageusement 5 à 10 jours, et extraction de charbon actif en grain expansé de manière à conserver ledit volume de charbon actif en grain nécessaire et suffisant dans le réacteur.

3. Procédé de dépollution selon l'une quelconque des revendications précédentes, **caractérisé en ce que** ladite injection des eaux est réalisée à une vitesse ascensionnelle comprise entre 7 et 20 m³/m².h, avantageusement entre 12 et 15 m³/m².h, de manière à obtenir une suspension dense de charbon actif expansé sous forme de lit expansé, surmontée d'une hauteur d'eau claire décantée.

4. Procédé de dépollution selon l'une quelconques des revendications précédentes, **caractérisé en ce que** ladite extraction de charbon actif en grain expansé est réalisée à partir d'au moins deux niveaux d'extraction du lit de charbon actif.

5. Procédé de dépollution selon l'une quelconque des revendications précédentes, **caractérisé en ce que** lesdites mesures d'absorbance des eaux sont réalisées à une longueur d'onde A comprise entre 200 et 300 nm, avantageusement 254 nm.

6. Procédé de dépollution selon l'une quelconques des revendications précédentes, **caractérisé en ce que** la granulométrie du charbon actif en grain est comprise entre 300 et 800 µm, avantageusement entre 600 et 800 µm.

7. Procédé de dépollution selon l'une quelconque des revendications précédentes, **caractérisé en ce que** l'injection journalière de charbon actif en grain dans le réacteur est réalisée au-dessus du lit de charbon actif en partie supérieure du réacteur.

8. Procédé de dépollution selon l'une quelconque des revendications précédentes, **caractérisé en ce qu'**il comprend au moins une étape de lavage du lit de charbon actif.

9. Procédé de dépollution selon la revendication 8, **caractérisé en ce que** ledit lavage est réalisé quand hₑ ≥ hₚ + 10 à 50%(hₚ), avantageusement hₑ ≥ hₚ + 10 à 20%(hₚ), hₑ représentant la hauteur du lit expansé sale et hₚ la hauteur du lit lavé.

10. Procédé de dépollution selon la revendication 8 ou 9, **caractérisé en ce que** ledit lavage comprend une phase d'expansion et une phase de décantation, ladite phase d'expansion consistant à appliquer au lit de charbon actif une vitesse d'expansion ascensionnelle de 20 à 50 m³/m².h, et plus avantageusement 30 m³/m².h, permettant la séparation du charbon actif en grain des matières en suspension présentes dans les eaux.

11. Procédé de dépollution selon l'une quelconques des revendications 8 à 10, **caractérisé en ce que** la durée de ladite phase d'expansion est comprise entre 5 et 15 minutes, avantageusement entre 7 et 11 minutes, et avantageusement **en ce que** ledit lavage est réalisé 1 à 7 fois par semaine, encore plus avantageusement 1 à 3 fois par semaine.

## Patentansprüche

1. Verfahren zur Reinigung von Wasser, typischerweise von Abwasser, das organische Mikroschadstoffe enthält, durch Adsorption auf körniger Aktivkohle in einem Aufstrombehandlungsreaktor, derart dass ein vorhergehend festgelegter Prozentsatz (%MP_{f}) von Mikroschadstoffen gebunden wird, welches das Einspritzen des Wassers im unteren Teil des Reaktors, der ein Aktivkohlebett enthält, umfasst, derart dass eine Expansion der Aktivkohle erzeugt wird und parallel dazu die Trennung des gereinigten Wassers und der Aktivkohlepartikel durch Schwerkraft und die Rückgewinnung des gereinigten und geklärten Wassers durch Überlauf im oberen Teil des Reaktors gewährleistet werden,
**dadurch gekennzeichnet, dass** das Verfahren mindestens die folgenden Schritte umfasst:
Bestimmen des Bindungsertrags UV (%UV_{f}) ausgehend vom im Voraus festgelegten Bindungsprozentsatz der Mikroschadstoffe (%MP_{f}) unter Verwendung der Beziehung %MP=f(%UV), wobei die Beziehung im Voraus für das Wasser auf die folgende Weise bestimmt wird:
(i) Entnehmen von Proben des Wassers;
(ii) Auswählen von einem oder mehreren in den Proben zu quantifizierenden organischen Mikroschadstoffen;
(iii) Messen der tatsächlichen Konzentration des oder der im Schritt (ii) ausgewählten organischen Mikroschadstoffe in den Proben und Messen der Absorbanz der Proben bei einer gegebenen Wellenlänge λ;
(iv) Behandeln der Proben durch Inkontaktbringen mit zunehmenden Dosen von körniger Aktivkohle;
(v) Messen, für jede getestete Aktivkohledosis, der tatsächlichen Konzentration des oder der im Schritt (ii) ausgewählten organischen Mikroschadstoffe in den Proben nach der Behandlung gemäß Schritt (iv);
(vi) Messen, für jede getestete Aktivkohledosis, der Absorbanz der Proben nach der Behandlung gemäß Schritt (iv) bei einer gegebenen Wellenlänge λ;
(vii) Bestimmen, für jede getestete Aktivkohledosis, des Bindungsprozentsatzes der Mikroschadstoffe (%MP) und/oder des Bindungsertrags UV (%UV), um so die Beziehungen %MP=f(Tx) und %UV=f(Tx) zu erhalten;
(viii) Bestimmen der Gleichung der Beziehung %MP=f(%UV), die den Bindungsprozentsatz der Mikroschadstoffe (%MP) in Abhängigkeit von dem Bindungsertrag UV (%UV) ausdrückt,
Bestimmen der Rate der Behandlung mit körniger Aktivkohle (Tx), die in den Reaktor einzuspritzen ist, ausgehend von dem im Voraus festgelegten Bindungsprozentsatz der Mikroschadstoffe (%MP_{f}), wobei die Rate der Behandlung mit in den Reaktor einzuspritzender körniger Aktivkohle (Tx) unter Verwendung der Beziehungen %MP=f(Tx) und/oder %UV=f(Tx) bestimmt wird, wobei die Beziehungen ausgehend von den Schritten (i) bis (vii) erhalten werden, und
Bestimmen des Volumens an körniger Aktivkohle, die im Reaktor erforderlich und ausreichend ist, um den %MP_{f} zu erhalten, durch UV-Kontrolle der Leistungen der Behandlung durch Adsorption auf körniger Aktivkohle bei der im Voraus definierten Behandlungsrate (Tx), das mindestens die folgenden Schritte umfasst:
a) tägliches Einspritzen von körniger Aktivkohle mit der im Voraus definierten Behandlungsrate (Tx) in den anfangs leeren Behandlungsreaktor, dann
b) Kontrolle, vorzugsweise mindestens einmal täglich, des Bindungsertrags UV_{c}(%UV_{c}), wobei die Kontrolle die folgenden Schritte umfasst:
(1) Messen der Absorbanz des Wassers vor der Behandlung durch Adsorption auf körniger Aktivkohle (A_{λAvTx}) bei einer gegebenen Wellenlänge λ;
(2) Messen der Absorbanz des Wassers nach der Behandlung durch Adsorption auf körniger Aktivkohle (A_{λApTx}) bei der gleichen Wellenlänge λ; und
(3) Berechnen des Bindungsertrags UV (%UV_{c}) ausgehend von den vor und nach der Behandlung gemessenen Absorbanzen (%UV_{c} = ((A_{λAvTx} - A_{λApTx}) / A_{λAvTx})*100),
c) Erhalten des erforderlichen und ausreichenden Volumens an körniger Aktivkohle, wenn der %UV_{c} während mindestens 5 Tagen, vorzugsweise 5 bis 10 Tagen, derart ist, dass: %UV_{c} = %UV_{f} ± 20%(%UV_{f}), und Abführen der expandierten körnigen Aktivkohle, derart dass das erforderliche und ausreichende Volumen an körniger Aktivkohle im Reaktor beibehalten wird.

2. Verfahren zur Reinigung von Wasser, typischerweise von Abwasser, das organische Mikroschadstoffe enthält, durch Adsorption auf körniger Aktivkohle in einem Aufstrombehandlungsreaktor, derart dass ein vorhergehend festgelegter Prozentsatz (%MP_{f}) von Mikroschadstoffen gebunden wird, welches das Einspritzen des Wassers im unteren Teil des Reaktors, der ein Aktivkohlebett enthält, umfasst, derart dass eine Expansion der Aktivkohle erzeugt wird und parallel dazu die Trennung des gereinigten Wassers und der Aktivkohlepartikel durch Schwerkraft und die Rückgewinnung des gereinigten und geklärten Wassers durch Überlauf im oberen Teil des Reaktors gewährleistet werden,
**dadurch gekennzeichnet, dass** das Verfahren mindestens die folgenden Schritte umfasst:
Bestimmen des Bindungsertrags UV (%UV_{f}) ausgehend vom im Voraus festgelegten Bindungsprozentsatz der Mikroschadstoffe (%MP_{f}) unter Verwendung der Beziehung %MP=f(%UV), wobei die Beziehung im Voraus für das Wasser auf die folgende Weise bestimmt wird:
(i) Entnehmen von Proben des Wassers;
(ii) Auswählen von einem oder mehreren in den Proben zu quantifizierenden organischen Mikroschadstoffen;
(iii) Messen der tatsächlichen Konzentration des oder der im Schritt (ii) ausgewählten organischen Mikroschadstoffe in den Proben und Messen der Absorbanz der Proben bei einer gegebenen Wellenlänge λ;
(iv) Behandeln der Proben durch Inkontaktbringen mit zunehmenden Dosen von körniger Aktivkohle;
(v) Messen, für jede getestete Aktivkohledosis, der tatsächlichen Konzentration des oder der im Schritt (ii) ausgewählten organischen Mikroschadstoffe in den Proben nach der Behandlung gemäß Schritt (iv);
(vi) Messen, für jede getestete Aktivkohledosis, der Absorbanz der Proben nach der Behandlung gemäß Schritt (iv) bei einer gegebenen Wellenlänge λ;
(vii) Bestimmen, für jede getestete Aktivkohledosis, des Bindungsprozentsatzes der Mikroschadstoffe (%MP) und/oder des Bindungsertrags UV (%UV), um so die Beziehungen %MP=f(Tx) und %UV=f(Tx) zu erhalten;
(viii) Bestimmen der Gleichung der Beziehung %MP=f(%UV), die den Bindungsprozentsatz der Mikroschadstoffe (%MP) in Abhängigkeit von dem Bindungsertrag UV (%UV) ausdrückt,
Bestimmen der Rate der Behandlung mit körniger Aktivkohle (Tx), die in den Reaktor einzuspritzen ist, ausgehend von dem im Voraus festgelegten Bindungsprozentsatz der Mikroschadstoffe (%MP_{f}), wobei die Rate der Behandlung mit in den Reaktor einzuspritzender körniger Aktivkohle (Tx) unter Verwendung der Beziehungen %MP=f(Tx) und/oder %UV=f(Tx) bestimmt wird, wobei die Beziehungen ausgehend von den Schritten (i) bis (vii) erhalten werden, und
Bestimmen des Volumens an körniger Aktivkohle, die im Reaktor erforderlich und ausreichend ist, um den %MP zu erhalten, durch UV-Kontrolle der Leistungen der Behandlung durch Adsorption auf körniger Aktivkohle bei der im Voraus definierten Behandlungsrate (Tx), das mindestens die folgenden Schritte umfasst:
a') vor der Inbetriebnahme des Behandlungsreaktors, Einführen einer Anfangscharge an körniger Aktivkohle in den Reaktor, wobei die Charge eine Kohlebetthöhe von zwischen 20 und 50 cm, vorteilhafterweise 30 cm, aufweist und die Charge derart ausgewählt wird, dass mindestens der im Voraus festgelegte Bindungsprozentsatz (%MP_{f}) der Mikroschadstoffe erhalten wird, dann
b') Kontrollieren, vorteilhafterweise mindestens einmal täglich, des Bindungsertrags UV_{c}(%UV_{c}) wobei das Kontrollieren die folgenden Schritte umfasst:
(1) Messen der Absorbanz des Wassers vor der Behandlung durch Adsorption auf körniger Aktivkohle (A_{λAvTx}) bei einer gegebenen Wellenlänge λ;
(2) Messen der Absorbanz des Wassers nach der Behandlung durch Adsorption auf körniger Aktivkohle (A_{λApTx}) bei der gleichen Wellenlänge λ; und
(3) Berechnen des Bindungsertrags UV (%UV_{c}) ausgehend von den vor und nach der Behandlung gemessenen Absorbanzen (%UV_{c} = ((A_{λAvTx} - A_{λApTx}) / A_{λAvTx})*100),
c') wenn der %UV_{c} derart ist, dass: %UV_{f} ≤ %UV_{c} ≤ %UV_{f} + 15 %, tägliches Einspritzen der körnigen Aktivkohle in den Reaktor bei der im Voraus definierten Behandlungsrate (Tx), dann
d') Kontrollieren des Bindungsertrags UV_{c}(%UV_{c}) bis zum Erhalten des erforderlichen und ausreichenden Volumens an körniger Aktivkohle, wenn der %UV_{c} während mindestens 5 Tagen, vorteilhafterweise 5 bis 10 Tagen, derart ist, dass: %UV_{c} = %UV_{f} ± 20 %(% UV_{f}), und Abführen der expandierten körnigen Aktivkohle, derart dass das erforderliche und ausreichende Volumen an körniger Aktivkohle im Reaktor beibehalten wird.

3. Reinigungsverfahren nach einem der vorhergehenden Ansprüche, **dadurch gekennzeichnet, dass** die Einspritzung des Wassers bei einer Aufstiegsgeschwindigkeit von zwischen 7 und 20 m³/m².h, vorteilhafterweise zwischen 12 und 15 m³/m².h, ausgeführt wird, derart, dass eine dichte Suspension von expandierter Aktivkohle in der Form eines expandierten Bettes erhalten wird, das von einer Höhe klaren, geklärten Wassers überragt wird.

4. Reinigungsverfahren nach einem der vorhergehenden Ansprüche, **dadurch gekennzeichnet, dass** die Abführung der expandierten körnigen Aktivkohle ausgehend von mindestens zwei Abführungsebenen des Aktivkohlebetts ausgeführt wird.

5. Reinigungsverfahren nach einem der vorhergehenden Ansprüche, **dadurch gekennzeichnet, dass** die Messungen der Absorbanz des Wassers bei einer Wellenlänge λ von zwischen 200 und 300 nm, vorteilhafterweise 254 nm, ausgeführt werden.

6. Reinigungsverfahren nach einem der vorhergehenden Ansprüche, **dadurch gekennzeichnet, dass** die Korngrößenverteilung der körnigen Aktivkohle zwischen 300 und 800 µm, vorteilhafterweise zwischen 600 und 800 µm, beträgt.

7. Reinigungsverfahren nach einem der vorhergehenden Ansprüche, **dadurch gekennzeichnet, dass** die tägliche Einspritzung von körniger Aktivkohle in den Reaktor über dem Aktivkohlebett im oberen Teil des Reaktors ausgeführt wird.

8. Reinigungsverfahren nach einem der vorhergehenden Ansprüche, **dadurch gekennzeichnet, dass** es mindestens einen Schritt des Waschens des Aktivkohlebetts umfasst.

9. Reinigungsverfahren nach Anspruch 8, **dadurch gekennzeichnet, dass** das Waschen ausgeführt wird, wenn hₑ ≥ hₚ + 10 bis 50 % (hₚ), vorteilhafterweise hₑ ≥ hₚ + 10 bis 20 % (hₚ), wobei hₑ die Höhe des schmutzigen expandierten Betts und hₚ die Höhe des gewaschenen Betts darstellen.

10. Reinigungsverfahren nach Anspruch 8 oder 9, **dadurch gekennzeichnet, dass** die Wäsche eine Expansionsphase und eine Klärungsphase umfasst, wobei die Expansionsphase darin besteht, auf das Aktivkohlebett eine Aufstromexpansionsgeschwindigkeit von 20 bis 50 m³/m².h und vorteilhafterweise 30 m³/m².h anzuwenden, wodurch die Trennung der körnigen Aktivkohle von den im Wasser in Suspension vorhandenen Stoffen ermöglicht wird.

11. Reinigungsverfahren nach einem der Ansprüche 8 bis 10, **dadurch gekennzeichnet, dass** die Dauer der Expansionsphase zwischen 5 und 15 Minuten, vorteilhafterweise zwischen 7 und 11 Minuten, beträgt und dass die Wäsche 1 bis 7 Mal wöchentlich, noch vorteilhafter 1 bis 3 Mal wöchentlich, ausgeführt wird.

## Claims

1. A method for depolluting water, typically waste water, containing organic micropollutants by adsorption on granular activated carbon in an ascending flow treatment reactor, so as to reduce a previously fixed percentage of micropollutants (%MP_{f}), comprising injecting water into the lower part of the reactor containing a bed of activated carbon so as to create an expansion of said activated carbon while simultaneously ensuring the gravity separation between the depolluted water and the particles of activated carbon and the recovery by overflow of the depolluted and decanted water in the upper part of the reactor,
**characterized in that** said method comprises at least the following steps:
determining the UV reduction yield (%UV_{f}) from said previously fixed micropollutant reduction percentage (%MP_{f}), using the relationship %MP=f(%UV), said relationship being determined beforehand for said water in the following way:
(i) taking samples from said water;
(ii) selecting one or more organic micropollutants to be quantified in said samples;
(iii) measuring the effective concentration of the organic micropollutant(s) selected in step (ii) in said samples and measuring the absorbance of said samples at a given wavelength λ;
(iv) treating said samples by contacting them with increasing doses of granular activated carbon;
(v) measuring, for each dose of activated carbon tested, the effective concentration of the organic micropollutant(s) selected in step (ii) in said samples after treatment according to step (iv);
(vi) measuring, for each dose of activated carbon tested, the absorbance of said samples after treatment according to step (iv) at a given wavelength λ;
(vii) determining, for each dose of activated carbon tested, the micropollutant reduction percentage (%MP) and/or the UV reduction yield (%UV) to thus obtain the relationships %MP=f(Tx) and %UV=f(Tx);
(viii) determining the equation of the relationship %MP=f(%UV), expressing the micropollutant reduction percentage (%MP) as a function of the UV reduction yield (%UV),
determining the granular activated carbon (Tx) treatment rate to be injected into said reactor from said previously fixed micropollutant reduction percentage (%MP_{f}), the granular activated carbon (Tx) treatment rate to be injected into the reactor being determined using the relationships %MP=f(Tx) and/or %UV=f(Tx), said relationships being obtained from said steps (i) to (vii), and
determining the volume of granular activated carbon necessary and sufficient in the reactor to obtain said %MP_{f} by UV control of the performance of the treatment by adsorption on granular activated carbon at the previously defined treatment rate (Tx), comprising at least the following steps:
a) daily injecting granular activated carbon at the treatment rate (Tx) previously defined in the initially empty treatment reactor, then
b) controlling, advantageously at least once a day, the UV_{c} reduction yield (%UV_{c}), said control comprising the following steps:
(1) measuring the absorbance at a given wavelength λ of the water before treatment by adsorption on granular activated carbon (A_{λAvTx});
(2) measuring the absorbance at the same wavelength λ of the water after treatment by adsorption on granular activated carbon (A_{λApTx}); and
(3) calculating the UV reduction yield (%UVC) from the absorbances measured before and after treatment (%UV_{c} = ((A_{λAvTx} - A_{λApTx})/A_{λAvTx}) *100),
c) obtaining the necessary and sufficient volume of granular activated carbon when said %UVc is such that: %UV_{c}=%UV_{f} ± 20% (%UV_{f}) for at least 5 days, advantageously 5 to 10 days, and extracting activated carbon in expanded grain so as to keep said volume of granular activated carbon necessary and sufficient in the reactor.

2. The method for depolluting water, typically waste water, containing organic micropollutants by adsorption on granular activated carbon in an ascending flow treatment reactor, so as to reduce a previously fixed micropollutant percentage (%MP_{f}), comprising injecting water into the lower part of the reactor containing a bed of activated carbon so as to create an expansion of said activated carbon while simultaneously ensuring the gravity separation between the depolluted water and the particles of activated carbon and the recovery by overflow of the depolluted and decanted water in the upper part of the reactor,
**characterized in that** said method comprises at least the following steps:
determining the UV reduction yield (%UV_{f}) from said previously fixed micropollutant reduction percentage (%MP_{f}), using the relationship %MP=f(%UV), said relationship being determined beforehand for said water in the following way:
(i) taking samples from said water;
(ii) selecting one or more organic micropollutants to be quantified in said samples;
(iii) measuring the effective concentration of the organic micropollutant(s) selected in step (ii) in said samples and measuring the absorbance of said samples at a given wavelength λ;
(iv) treating said samples by contacting them with increasing doses of granular activated carbon;
(v) measuring, for each dose of activated carbon tested, the effective concentration of the organic micropollutant(s) selected in step (ii) in said samples after treatment according to step (iv);
(vi) measuring, for each dose of activated carbon tested, the absorbance of said samples after treatment according to step (iv) at a given wavelength λ;
(vii) determining, for each dose of activated carbon tested, the micropollutant reduction percentage (%MP) and/or the UV reduction yield (%UV) to thus obtain the relationships %MP=f(Tx) and %UV=f(Tx);
(viii) determining the equation of the relationship %MP=f(%UV), expressing the micropollutant reduction percentage (%MP) as a function of the UV reduction yield (%UV),
determining the granular activated carbon (Tx) treatment rate to be injected into said reactor from said previously fixed micropollutant reduction percentage (%MP_{f}), the granular activated carbon (Tx) treatment rate to be injected into the reactor being determined using the relationships %MP=f(Tx) and/or %UV=f(Tx), said relationships being obtained from said steps (i) to (vii), and
determining the volume of granular activated carbon necessary and sufficient in the reactor to obtain said %MP by UV control of the performance of the treatment by adsorption on granular activated carbon at the previously defined treatment rate (Tx), comprising at least the following steps:
a') prior to the implementation of the treatment reactor, introducing an initial charge of granular activated carbon in the reactor, said charge representing a carbon bed height comprised between 20 and 50 cm, advantageously 30 cm, and said charge being selected so as to obtain at least the previously fixed micropollutant reduction percentage (%MP_{f}), then
b') controlling, advantageously at least once a day, the UV_{c} reduction yield (%UV_{c}), said control comprising the following steps:
(1) measuring the absorbance at a given wavelength λ of the water before treatment by adsorption on granular activated carbon (A_{λAvTx});
(2) measuring the absorbance at the same wavelength λ of the water after treatment by adsorption on granular activated carbon (A_{λApTx}); and
(3) calculating the UV reduction yield (%UV_{C}) from the absorbances measured before and after treatment (%UV_{c} = ((A_{λAvTx} - A_{λApTx})/A_{λAvTx})*100),
c') when said %UV_{c} is such that: %UV_{f} ≤ %UV_{c} ≤ %UV_{f} + 15%, daily injecting granular activated carbon at the treatment rate (Tx) previously defined in the reactor then
d') controlling the UV_{C} reduction yield (%UV_{C}) until the necessary and sufficient volume of granular activated carbon is obtained when said %UV_{c} is such that: %UV_{c}=%UV_{f} ± 20% (%UV_{f}) for at least 5 days, advantageously 5 to 10 days, and extracting expanded granular activated carbon so as to keep said volume of granular activated carbon necessary and sufficient in the reactor.

3. The depollution method according to any one of the preceding claims, **characterized in that** said water injection is carried out at an upward speed comprised between 7 and 20 m³/m².h, advantageously between 12 and 15 m³/m².h, so as to obtain a dense suspension of expanded activated carbon in the form of expanded bed, surmounted by a height of clear decanted water.

4. The depollution method according to any one of the preceding claims, **characterized in that** said extraction of expanded granular activated carbon is carried out from at least two extraction levels of the bed of activated carbon.

5. The depollution method according to any one of the preceding claims, **characterized in that** said water absorbance measurements are carried out at a wavelength λ comprised between 200 and 300 nm, advantageously 254 nm.

6. The depollution method according to any one of the preceding claims, **characterized in that** the particle size of the granular activated carbon is comprised between 300 and 800 µm, advantageously between 600 and 800 µm.

7. The depollution method according to any one of the preceding claims, **characterized in that** the daily injection of granular activated carbon into the reactor is carried out above the bed of activated carbon in the upper part of the reactor.

8. The depollution method according to any one of the preceding claims, **characterized in that** it comprises at least one step of washing the bed of activated carbon.

9. The depollution method according to claim 8, **characterized in that** said washing is carried out when hₑ ≥ hₚ + 10 at 50% (hₚ), advantageously hₑ ≥ hₚ + 10 at 20% (hₚ), hₑ representing the height of the dirty expanded bed and hₚ the height of the washed bed.

10. The depollution method according to claim 8 or 9, **characterized in that** said washing comprises an expansion phase and a settling phase, said expansion phase consisting in applying to the bed of activated carbon an upward expansion rate of 20 to 50 m³/m².h, and more advantageously 30 m³/m².h, allowing the separation of the granular activated carbon from the suspended materials present in water.

11. The depollution method according to any one of claims 8 to 10, **characterized in that** the duration of said expansion phase is comprised between 5 and 15 minutes, advantageously between 7 and 11 minutes, and advantageously **in that** said washing is carried out 1 to 7 times per week, even more advantageously 1 to 3 times per week.
